(19) Europäisches Patentamt
European Patent Office
Office européen des brevets

(11) Numéro de publication : **0 462 901 A1**

# (12) DEMANDE DE BREVET EUROPEEN

(21) Numéro de dépôt : **91401671.2**

(51) Int. Cl.$^5$ : **G01J 5/60**, G01J 5/00

(22) Date de dépôt : **20.06.91**

(30) Priorité : **21.06.90 FR 9007790**

(43) Date de publication de la demande :
**27.12.91 Bulletin 91/52**

(84) Etats contractants désignés :
**DE FR GB IT**

(71) Demandeur : **COMMISSARIAT A L'ENERGIE ATOMIQUE**
**31-33, rue de la Fédération**
**F-75015 Paris (FR)**

(72) Inventeur : **Mondot, Michel**
**2, rue Cerveteri**
**F-93190 Livry Gargan (FR)**
Inventeur : **Rigal, Jean-Pierre**
**9, rue de Dalhias**
**F-77400 Pomponne (FR)**

(74) Mandataire : **Mongrédien, André et al**
**c/o BREVATOME 25, rue de Ponthieu**
**F-75008 Paris (FR)**

## (54) Procédé d'exploitation des signaux fournis par un pyromètre et pyromètre en faisant application.

(57) 1. Procédé d'exploitation des signaux fournis par un pyromètre optique à deux voies caractérisé en ce que :

— on définit pour chaque voie une bande passante optique large ;

— on prend en compte, aussi bien pour l'étalonnage que pour la mesure, la luminance énergétique du spectre reçu respectivement dans la première et dans la deuxième bande ;

— on étalonne le photodétecteur en se référant à un corps noir que l'on porte successivement à au moins deux températures connues, en calculant théoriquement ces luminances énergies à l'aide d'un ordinateur qui, à partir de la formule de Planck $L = f(\lambda,T)$ effectue les intégrales

$$\int L d\lambda$$

— puis, à l'aide du pyromètre ainsi étalonné, on mesure les tensions électriques $V_i$ et $V_j$ fournies par la voie 1 et par la voie 2 du pyromètre lors de l'examen optique du corps ;

— on en déduit, par les fonctions $V = g(L)$, les valeurs $L_A$ et $L_B$ de la luminance énergétique réellement reçue par chaque voie ;

— on recherche par itération à l'aide d'un ordinateur celle des courbes de Planck $L=f(\lambda,T)$ dont les intégrales

$$\int L d\lambda$$

sont précisément égales aux luminances mesurées.

EP 0 462 901 A1

Jouve, 18, rue Saint-Denis, 75001 PARIS

La présente invention se rapporte au domaine des appareils de mesure de températures par voie optique, connus généralement sous le nom de pyromètres optiques. Ces appareils possèdent une tête d'observation optique des corps dont on veut mesurer la température et qui se compose essentiellement d'un capteur photoélectrique ou détecteur, apte à transformer en signal électrique - tension ou courant - le flux de photons énergétiques reçu du corps. C'est donc cette grandeur électrique dont le physicien dispose pour en déduire des renseignements sur la température du corps. L'invention concerne plus spécialement l'exploitation de ces signaux électriques. Elle concerne plus spécialement encore des pyromètres aptes à mesurer avec précision la température rapidement évolutive de corps en mouvement.

On commencera d'abord par rappeler le principe connu du fonctionnement des pyromètres connus.

Les plus utilisés de ces appareils, parce que jusqu'à ce jour les plus précis, sont les pyromètres dits "monochromatiques" parce qu'ils travaillent sur une partie très "étroite du spectre des longueurs d'ondes, pratiquement réduite à une radiation de longueur d'onde λ. Ils s'appuient sur la propriété commune à tous les corps d'émettre un rayonnement thermique, fonction de la température et qui, pour une longueur d'onde donnée λ et pour le corps noir (corps émettant par définition toutes les radiations monochromatiques quand il est chauffé) s'exprime par la loi de Planck :

$$L(\lambda,T) = C_1 \lambda^{-5} \cdot \exp\left(\frac{C_2}{\lambda T} - 1\right)^{-1}$$

formule dans laquelle :

– $L(\lambda,T)$est la luminance spectrique du corps noir à la température absolue T et pour la longueur d'onde λ ;

– $C_1$ est une constante égale à 2 $hc^2$, avec h constante de Planck, et c vitesse de la lumière. $C_1$ a la valeur $11,9.10^{-17}$ $W.m^2$ ;

– $C_2$ est une constante égale à hc/k, avec k constante de Boltzmann. $C_2$ a la valeur 14.387 μm.K.

– T est la température absolue du corps.

Par souci de simplification, on désignera dans la suite du présent texte, la relation de Planck précédente sous la forme :

$$L = f(\lambda, T)$$

Depuis le siècle précédent, on a utilisé cette propriété des corps pour réaliser des pyromètres optiques en assimilant de façon approximative tous les corps au corps noir qui sert de référence. Si l'on observe le rayonnement d'un corps pour une longueur d'onde λ en le comparant à celui d'un corps noir de référence pour la même longueur d'onde, ceci permet, par recherche de la température $T_1$ telle que L (mesurée) = $f(\lambda, T_1)$ de déterminer $T_1$. Comme la mesure directe de L par le détecteur du pyromètre n'est pas directement accessible puisque celui-ci a pour fonction de convertir les énergies en tensions électriques, on s'y prend de la façon suivante, décrite en se référant aux figures 1 et 2 ci-jointes.

Sur la figure 1, on a représenté pour différentes températures $T_1$, $T_2$...$T_n$ les courbes représentant la fonction L = (λ,T) pour un corps noir étalon. En chauffant par ailleurs un tel corps noir étalon aux différentes températures $T_1$, $T_2$...$T_n$, on note à chaque fois les tensions électriques $V_1$, $V_2$,...$V_n$ délivrées par le détecteur du pyromètre pour une même radiation $\lambda_1$, et on les reporte sur le graphique de la figure 2 qui montre la fonction V = g(L) pour $\lambda = \lambda_1$. Cette fonction est linéaire et l'on a ainsi étalonné l'appareil en luminances. Lorsqu'au cours de l'observation à la longueur d'onde $\lambda_1$ d'un corps de température inconnue, le pyromètre affiche une tension V, la figure 2 permet d'en déduire la luminance L du corps observé pour la longueur d'onde $\lambda_1$.
En plaçant le point correspondant sur le graphique de la figure 1, on en déduit celle des courbes de Planck qui passe par ce point, et, par conséquent, la température.

Une telle méthode est néanmoins très approximative car l'hypothèse faite - assimilation de tous les corps rayonnant au corps noir - est, dans certains cas, grossièrement inexacte.

En effet, pour un corps quelconque, la loi de Planck s'écrit $L = \varepsilon f(\lambda,T)$, ε étant un facteur sans dimension, appelé émissivité, qui traduit l'écart entre la luminance idéale et la luminance réelle et qui dépend de certaines caractéristiques du corps émissif, comme, entre autres, la nature du corps, sa température, son état de surface, la longueur d'onde d'observation, l'angle d'incidence sous lequel on l'observe etc. Ce facteur, qui est égal à 1 pour le corps noir, varie dans la pratique, de 0 à 1. A titre d'exemple, les corps isolants ont des émissivités >0,6, les métaux <0,2 et les corps polis <0,05. On réalise par conséquent l'importance des erreurs systématiques causées par ce facteur ε en pyrométrie optique et la raison pour laquelle on a cherché à en corriger les effets néfastes en recourant à la méthode connue de la pyrométrie dite "bichromatique".

Cette méthode connue consiste à recueillir les signaux optiques d'un examen pyrométrique sur deux longueurs d'onde $\lambda_1$ et $\lambda_2$ suffisamment voisines pour que l'on puisse supposer que l'émissivité ε est la même

pour ces deux radiations. On rappelera rapidement le principe ci-après en se référant aux figures 3 et 4.

A partir d'un corps noir de référence, que l'on chauffe à différentes températures, on trace les courbes d'étalonnage V = f(L) pour chacune des deux longueurs d'onde de travail $\lambda_1$ et $\lambda_2$ (figure 3) en procédant comme précédemment pour la figure 2. L'appareil est ainsi étalonné. On mesure ensuite, pour les mêmes longueurs d'onde $\lambda_1$ et $\lambda_2$ les tensions électriques $V_1$ et $V_2$ émises par le photodétecteur du pyromètre lors de l'observation d'un corps de température inconnue. A partir de $V_1$ et $V_2$ reportées sur la figure 3, on déduit les luminances correspondantes $L_1$ et $L_2$ pour chaque radiation monochromatique $\lambda_1$ et $\lambda_2$. On connaît alors deux points A($\lambda_1$, $L_1$) et B($\lambda_2$, $L_2$) de la courbe de Planck et il est possible à un calculateur d'identifier cette courbe de façon précise, c'est-à-dire en fin de compte la température $T_3$ du corps observé (figure 4).

Bien qu'en progrès important par rapport à la précédente, cette méthode de mesure présente encore un certain nombre de défauts systématiques et de contraintes pour sa mise en oeuvre.

En effet, l'hypothèse selon laquelle il existe une émissivité propre pour chaque longueur d'onde est invérifiable. Par ailleurs, la précision de la mesure est limitée par la proximité nécessaire des deux points A et B ($\lambda_1$ et $\lambda_2$ voisins par hypothèse) qui conduit à une imprécision sur l'identification de la courbe de Planck passant par ces deux points. De plus, le demandeur a pu mettre en évidence que cette méthode nécessitait que les valeurs choisies pour $\lambda_1$ et $\lambda_2$ soient toutes deux inférieures à la valeur $\lambda_{max}$ correspondant au sommet de la courbe de Planck. Or, ce sommet est a priori inconnu au moment de la mesure. Cette nécessité découle de l'obligation de respecter certaines hypothèses mathématiques, telles que produit $\lambda.T<3000$ µm.K et tensions mesurées supérieures à un seuil qui varie avec l'étalonnage. Ces conditions limitent l'utilisation du pyromètre à l'étude des matériaux fortement émissifs mais dont la température est également inférieure à un certain seuil ($T<3000/\lambda$). Les fortes émissivités sont principalement obtenues dans le cas des isolants électriques (émissivité souvent supérieure à 0,6).

De plus, la condition $\lambda_1$ et $\lambda_2 < \lambda_{max}$ imposent un fonctionnnement du pyromètre avec de faibles luminances, c'est-à-dire dans une zone voisine du seuil de détection de l'appareil.

Enfin, les mesures monochromatiques nécessitent des signaux de grande amplitude et des températures ou émissivité élevées, et elles sont lentes. La méthode de pyrométrie bichromatique est donc pratiquement inapplicable à la mesure de la température de corps en mouvement à vitesse élevée et/ou à température rapidement évolutive.

On trouvera d'ailleurs une description détaillée de cet état de l'art en matière de pyrométrie bichromatique dans la publication "Bouriannes, Moreau, Un pyromètre rapide à plusieurs couleurs", Revue de Physique Appliquée, tome 12, page 893, Mai 1977.

La présente invention a précisément pour objet un procédé d'exploitation des signaux fournis par un pyromètre optique qui permet de s'affranchir de l'émissivité et de mesurer la température de corps en mouvement et/ou à température rapidement évolutive, en effectuant les mesures non plus sur la luminance spectrique recueillie autour de deux radiations monochromatiques voisines, mais en recourant à des mesures de luminances énergétiques.

Ce procédé d'exploitation des signaux fournis par un pyromètre optique à deux voies 1 et 2, se caractérise en ce que :

– on définit pour chaque voie une bande passante optique large, au moins égale à 0,5 µm, à savoir, pour la voie 1, la partie du spectre lumineux comprise entre les longueurs d'onde $\lambda_{A1}$ et $\lambda_{A2}$ et, pour la voie 2, la partie de ce même spectre lumineux comprise entre les longueurs d'onde $\lambda_{B1}$ et $\lambda_{B2}$ ;

– on prend en compte, aussi bien pour l'étalonnage de l'appareil que pour la mesure, la luminance énergétique du spectre reçu respectivement dans la première et dans la deuxième bande optique ;

– on étalonne lesphotodétecteurs en se référant à un corps noir que l'on porte successivement à au moins deux températures connues, de la façon suivante pour chacune d'elles :

a) on mesure les tensions électriques $V_1$ et $V_2$ fournies par chaque voie du pyromètre, qui correspondent respectivement aux luminances énergétiques $L_A$ et $L_B$ inconnues émises dans chaque bande optique du pyromètre ;

b) on calcule théoriquement ces luminances énergetiques à l'aide d'un ordinateur qui, à partir de la formule de Planck $L = f(\lambda)$ effectue les intégrales,

$$\int_{\lambda_{A1}}^{\lambda_{A2}} L d\lambda \quad \text{et} \quad \int_{\lambda_{B1}}^{\lambda_{B2}} L d\lambda$$

pour chaque bande passante optique, ce qui fournit les valeurs vraies de $L_A$ et $L_B$ ;

c) on détermine ensuite les fonctions V = g(L) pour chacune des deux voies du pyromètre;

– puis, à l'aide du pyromètre ainsi étalonné, on effectue les mesures de la température inconnue d'un corps à examiner en mettant en oeuvre les étapes suivantes :

d) on mesure les tensions électriques $V_i$ et $V_j$ fournies par la voie 1 et par la voie 2 du pyromètre lors de l'examen optique du corps ;

e) on en déduit, par les fonctions V = g(L), les valeurs $L_A$ et $L_B$ de la luminance énergétique réellement reçue par chaque voie ;

f) on recherche par itération à l'aide d'un ordinateur celle des courbes de Planck L = f(λ) dont le rapport des intégrales

$$\int_{\lambda_{A_1}}^{\lambda_{A_2}} L\,d\lambda \Big/ \int_{\lambda_{B_1}}^{\lambda_{B_2}} L\,d\lambda$$

est précisément égal au rapport $L_A/L_B$, ladite courbe correspondant précisément à la température recherchée.

Comme on le comprend de ce qui précède, le procédé objet de l'invention, qui s'applique à des pyromètres optiques à deux voies de mesure, d'un type en soi connu, a son originalité et trouve la source de ses performances dans le fait que les deux voies de mesure, au lieu de travailler comme dans l'art connu de façon quasi monochromatique sur une longueur d'onde déterminée, sont réglées - à l'aide de filtres et d'un miroir dichroïque dont l'emploi est à la portée de l'homme de métier - pour recevoir l'énergie transmise par les photons lumineux dans deux bandes optiques larges, de largeurs au moins égales par exemple à 0,5 µm. Il en résulte par conséquent que le procédé selon l'invention est sensible, dans chacune de ses deux voies, non plus à la luminance spectrique (correspondant idéalement à une raie monochromatique) mais à la luminance énergétique qui correspond dans chaque bande à l'intégrale de la luminance spectrique entre $\lambda_{A1}$ et $\lambda_{A2}$ pour la voie 1 et $\lambda_{B1}$ et $\lambda_{B2}$ pour la voie 2. Cette luminance énergétique s'évalue en watts par unité de surface et par unité d'angle solide et elle est représentée, dans le graphique L = f(λ) des courbes de Planck (figure 1) par la surface comprise entre la courbe correspondant à la température d'émission du corps, l'axe des abscisses et les deux droites d'abscisses $\lambda_{A1}$ et $\lambda_{A2}$ ou $\lambda_{B1}$ et $\lambda_{B2}$.

Dans ce procédé, le photodétecteur du pyromètre travaille sur des énergies, c'est-à-dire sur des grandeurs physiques réellement accessibles, et non plus sur des longueurs d'onde monochromatiques qui n'ont pas vraiment d'existence réelle.

De plus, le procédé décrit permet de s'affranchir de l'émissivité du corps examiné, ce qui peut s'expliquer de la manière simplifiée suivante.

L'étape du procédé qui consiste à rechercher la courbe de Planck L = f(λ) - que la théorie indique comme étant unique - pour laquelle le rapport des deux intégrales

$$\int_{\lambda_{A_1}}^{\lambda_{A_2}} L\,d\lambda \Big/ \int_{\lambda_{B_1}}^{\lambda_{B_2}} L\,d\lambda$$

est égal au rapport $L_A/L_B$ déduit de la mesure, se déroule selon des séquences itératives convergentes qui comparent les luminances mesurées et les luminances calculées pour chaque voie. Il en résulte à chaque instant la nécessité d'établir des comparaisons de luminances sous forme de rapports mathématiques au cours desquels le coefficient ε de la formule de Planck s'élimine automatiquement.

Enfin, à condition d'employer un photodétecteur approprié, le procédé objet de l'invention permet d'étendre la technique pyrométrique, autrefois réservée aux températures élevées (>1000°C) à des températures plus basses, voisines par exemple de 250°C.

La présente invention a également pour objet un procédé d'exploitation des signaux fournis par un pyromètre à trois photodétecteurs et un pyromètre conçu pour la mise en oeuvre d'un tel procédé.

Ce procédé d'exploitation des signaux fournis par un pyromètre optique, se caractérise en ce que l'information électromagnétique fournie par le pyromètre est transmise simultanément et en parallèle à trois photodétecteurs A, B et C spécialisé chacun dans une bande de longueur d'onde Δλ et en ce que l'on constitue les deux voies 1 et 2 de l'appareil de trois manières différentes en utilisant successivement les couples de photodétecteurs AB, BC et AC.

Le pyromètre conçu pour la mise en oeuvre du procédé précédent se caractérise en ce qu'il comporte trois photodétecteurs, et, pour transmettre l'information électromagnétique depuis le capteur optique jusqu'à ces photodétecteurs, une fibre optique à coeur triple, chacun de ceux-ci alimentant l'un des trois photodétecteurs.

De toute façon, l'invention sera mieux comprise à la lecture qui suit de la description de plusieurs exemples d'application, description qui sera faite à titre non limitatif et en ce qui concerne la théorie du fonctionnement, en se référant aux figures 5 à 8 ci-jointes, sur lesquelles :

- la figure 5 montre le schéma connu du convertisseur photoélectrique d'un pyromètre à deux voies d'un type connu ;
- la figure 6 montre la disposition des deux bandes passantes optiques ;
- la figure 7 illustre la construction des fonctions V(L) pendant la phase d'étalonnage ;
- la figure 8 illustre la phase de mesure et la recherche par l'ordinateur de la courbe $L = f(\lambda)$ correspondant à la température du corps examiné.

La figure 9 montre le schéma de principe d'un pyromètre optique adapté à la mise en oeuvre du procédé selon l'invention.

Sur la figure 5, on a représenté schématiquement une réalisation connue du convertisseur photoélectrique d'un pyromètre optique à deux voies 1 et 2. Sur cette figure 5, l'information optique en provenance du capteur optique, non représenté, du pyromètre, est véhiculée par la fibre optique 2. Une première lentille 4 dirige le faisceau vers un miroir dichroïque 6 à 45° qui le divise en deux parties alimentant respectivement la voie 1 et la voie 2. Chaque voie comprend une lentille 8, un filtre passe-bande 10, un détecteur 12 apte à traduire en signal électrique l'énergie reçue par chaque voie, puis un amplificateur 14 à la sortie duquel sont disponibles les signaux de tension V dont il est question par ailleurs.

Le procédé selon l'invention qui met en oeuvre un convertisseur photoélectrique de même nature que celui de la figure 5, comporte d'abord une phase d'étalonnage du pyromètre ainsi constitué qui le met à même d'aborder la phase de mesure proprement dite ultérieure.

La phase d'étalonnage consiste d'abord, par le choix ou le réglage du miroir 6 et des filtres 10, à fixer les quatre longueurs d'onde $\lambda_{A1}$, $\lambda_{A2}$, $\lambda_{B1}$ et $\lambda_{B2}$ qui déterminent les bandes passantes larges, $\Delta\lambda_A = \lambda_{A2} - \lambda_{A1}$ et $\Delta\lambda_B = \lambda_{B2} - \lambda_{B1}$, centrées sur les longueurs d'onde $\lambda_A$ et $\lambda_B$, qui constituent les domaines d'activité en longueurs d'ondes des voies 1 et 2 du pyromètre. A titre d'exemple $\Delta\lambda_A$ et $\Delta\lambda_B$ sont de l'ordre de 0,6 à 1 µm. La figure 6 montre une position possible de ces deux bandes passantes optiques $\Delta\lambda_A$ et $\Delta\lambda_B$ en fonction de la longueur d'onde $\lambda$ .

Ce réglage étant effectué, on examine à l'aide du pyromètre un corps noir étalon porté à une température $T_1$. Sous l'influence du rayonnement de ce corps noir, les voies 1 et 2 délivrent les tensions $V_1(T_1)$ et $V_2(T_1)$. Ces tensions correspondent aux luminances énergétiques $L_A(T_1)$ et $L_B(T_1)$ inconnues émises par le corps noir dans les bandes optiques $\Delta\lambda_A$ et $\Delta\lambda_B$. A l'aide d'un ordinateur, spécialement programmé à cet effet, on calcule alors ces deux luminances inconnues en effectuant les intégrales suivantes de la fonction $L = f(\lambda)$ de Planck :

$$L_A(T_1) = \int_{\lambda_{A1}}^{\lambda_{A2}} L\,d\lambda \quad \text{et} \quad L_B(T_1) = \int_{\lambda_{B1}}^{\lambda_{B2}} L\,d\lambda$$

Parvenu à ce stade de l'étalonnage, on porte les corps noirs étalons à une température $T_2$ et l'on recommence les mêmes opérations, ce qui fournit $v_1(T_2)$ et $V_2(T_2)$ ainsi que $L_A(T_2)$ et $L_B(T_2)$. Le but de la phase d'étalonnage étant la détermination des fonctions $V = g(L)$ pour chaque voie, il y a à ce stade deux possibilités. Ou bien on admet, ce qui se trouve vérifié dans la majorité des cas, que ces fonctions sont linéaires et on peut alors tracer les droit-es correspondantes dans le plan (V, L) à partir des autres données précédentes, ou bien par souci de perfection, on trace complètement les deux courbes à partir d'un plus grand nombre de points en portant successivement le corps noir étalon à plusieurs températures différentes.

La figure 7 montre la construction des deux fonctions $V = g(L)$ dans la première hypothèse.

La phase d'étalonnage est alors terminée et l'appareil est prêt à effectuer une mesure.

Pour effectuer ensuite la mesure de la température d'un corps de nature et de température inconnues, on s'y prend de la façon suivante.

On examine avec le pyromètre ainsi réglé le rayonnement thermique du corps en question. Ce rayonnement correspond aux tensions électriques $V_i$ et $V_j$ fournies par la voie 1 et la voie 2 du pyromètre. En reportant ces valeurs sur les courbes d'étalonnage $V = g(L)$ de la figure 7, on obtient les valeurs $L_A$ et $L_B$ de la

luminance énergétique effectivement reçue par chacune des voies 1 et 2 de l'appareil.

Il suffit enfin de rechercher, par itérations successives à l'aide d'un ordinateur programmé à cet effet, dans le plan (L, λ) de la figure 8, celle des courbes de planck L = f(λ) telle que le rapport des intégrales

$$\int_{\lambda_{A1}}^{\lambda_{A2}} L\,d\lambda \Big/ \int_{\lambda_{B1}}^{\lambda_{B2}} L\,d\lambda$$

soient est égal au rapport $L_A/L_B$. La température T correspondant à cette courbe de la famille est précisément la température du corps examiné.

Ceci revient à dire que le rapport des deux surfaces $S_1$ et $S_2$ de la figure 8, délimitées par la courbe de Planck L = f(λ,T) référencée 16, et l'axe des abscisses est unique. On peut d'ailleurs rappeler que la théorie indique l'unicité de cette courbe.

Comme expliqué précédemment, le résultat ainsi trouvé est indépendant de l'émissivité du corps observé et est beaucoup plus précis que celui qu'aurait fourni la méthode antérieure de la pyrométrie "bichromatique" classique.

Les performances d'un pyromètre optique mettant en oeuvre le procédé objet de l'invention sont également remarquables en fonction du facteur temps, car la rapidité du procédé n'étant limitée que par le temps de calcul de l'ordinateur, il est possible d'atteindre une résolution temporelle de quelques nanosecondes, notamment si l'on emploie, en outre, des détecteurs dont la sensibilité spectrale est telle qu'elle permet le traitement à cette échelle de temps de bandes passantes optiques relativement larges ($\Delta > 0{,}5$ µm). Cette particularité permet par conséquent la mesure de l'évolution en température d'un corps, éventuellement même en mouvement rapide, et à évolution thermique également rapide.

Pour rendre tout à fait claire la compréhension du mode de fonctionnement du procédé objet de l'invention, on notera qu'il est possible, si l'on ne souhaite pas disposer des températures en temps réel, d'enregistrer d'abord les valeurs des potentiels V = f(t) en fonction du temps sur chaque voie, puis de faire ensuite le calcul de recherche de l'évolution correspondante des températures.

En se référant maintenant à la figure 9, on va décrire le schéma de principe d'un pyromètre optique fonctionnant selon le procédé d'exploitation de signaux objet de l'invention et à l'aide de trois photodétecteurs montés en parallèle.

Dans ce mode de réalisation d'un pyromètre optique, la tête optique 16 de captation des rayonnements électromagnétiques émis par le corps dont on veut mesurer la température alimente en sortie une fibre à coeur triple 17 dont on a représenté à plus grande échelle un tronçon en 18 montrant les trois composantes 19 du coeur de la fibre. A sa sortie en 20, cette fibre est décomposée en ses trois coeurs 19a, 19b et 19c dont chacun alimente l'un des photodétecteurs A, B et C. Entre les extrémités des fibres unitaires 19 et l'entrée de chacun des détecteurs se trouve montée une lentille d'accomodation 21 et un filtre 22 définissant précisément pour chacun des photodétecteurs A, B et C le domaine de longueur d'ondes Δλ dans lequel il sera amené à travailler. Le pyromètre de la figure 9 est exploité selon le procédé à deux voies, objet de l'invention en utilisant simultanément les indications des trois photodétecteurs A, B et C groupés de trois manières différentes selon les couples AB, BC et AC.

L'intérêt d'un tel montage est de s'affranchir totalement des variations possibles d'émissivité du corps à observer entre les deux canaux de longueur d'ondes constituant à chaque fois les voies 1 et 2 de la chaîne d'exploitation des signaux et en même temps de calculer la valeur exacte de cette émissivité. Le pyromètre de la figure 9 en association avec le procédé d'exploitation des signaux, objet de l'invention, permet ainsi de calculer à l'aide d'une seule tête pyrométrique 16, la température et l'émissivité d'un corps en ne réalisant qu'une seule mesure. On peut même de plus, dans le cas où l'on constate effectivement une variation d'émissivité d'un canal à l'autre, déterminer la loi de variation de cette émissivité en fonction de la longueur d'onde.

Enfin, l'utilisation d'une fibre 17 à coeur triple amène un progrès très important dû au fait qu'il est très difficile sinon impossible d'utiliser un deuxième miroir dichroïque tel que le miroir 6 de la figure 5 pour réaliser, dans l'infrarouge les trois voies unitaires 19a, 19b et 19c du système. A l'aide de la fibre optique 17 au contraire, cette réalisation est d'une grande simplicité et permet d'avoir la même information électromagnétique présente au même moment sur les trois entrées des détecteurs A, B et C sans aucune complication de montage.

A titre d'exemple d'application, on a pu étudier, grâce au procédé objet de l'invention, la mesure du couple température-émissivité d'un objet en aluminium poli se déplaçant à une vitesse voisine de 2500 mètres par seconde et dont l'élévation brutale de température est provoquée par un choc intense. L'analyse spectrale,

faite dans les bandes optiques comprises entre 2 µm et 4 µm, montre que la température atteint un palier au bout de 800 nanosecondes à une valeur de 445°C, l'émissivité ε atteignant la valeur 0,15.

Lorsque le pyromètre utilisant le procédé de l'invention est utilisé dans le domaine du rayonnement infrarouge, il peut fonctionner avec les performances suivantes :

- un temps de réponse inférieur de 10 nanosecondes ;
- une distance entre l'objet en mouvement et le pyromètre pouvant être supérieure à 15 mètres ;
- une surface d'analyse inférieure à 10 millimètres de côté ;
- une durée miniale d'observation de 5 microsecondes,
- une vitesse de l'objet de quelques milliers de mètres par seconde,
- une bande passante optique d'étude comprise entre 2 et 4 micromètres (selon le choix des filtres infrarouges),
- une température de luminance minimale mesurable approximative de 225 +/-25°C (selon le choix de la largeur des filtres infrarouges).

## Revendications

1. procédé d'exploitation des signaux fournis par un pyromètre optique à deux voies 1 et 2, caractérisé en ce que :
   - on définit pour chaque voie une bande passante optique large, au moins égale à 0,5 µm, à savoir, pour la voie 1, la partie du spectre lumineux comprise entre les longueurs d'onde $\lambda_{A1}$ et $\lambda_{A2}$ et, pour la voie 2, la partie de ce même spectre lumineux comprise entre les longueurs d'onde $\lambda_{B1}$ et $\lambda_{B2}$ ;
   - on prend en compte, aussi bien pour l'étalonnage de l'appareil que pour la mesure, la luminance énergétique du spectre reçu respectivement dans la première et dans la deuxième bande optique ;
   - on étalonne le photodétecteur en se référant à un corps noir que l'on porte successivement à au moins deux températures connues, de la façon suivante pour chacune d'elles :

     a) on mesure les tensions électriques $V_1$ et $V_2$ fournies par chaque voie du pyromètre, qui correspondent respectivement aux luminances énergétiques $L_A$ et $L_B$ inconnues émises dans chaque bande optique du pyromètre ;

     b) on calcule théoriquement ces luminances énergétiques à l'aide d'un ordinateur qui, à partir de la formule de Planck $L = f(\lambda)$ effectue les intégrales,

     $$\int_{\lambda_{A1}}^{\lambda_{A2}} L\,d\lambda \quad \text{et} \quad \int_{\lambda_{B1}}^{\lambda_{B2}} L\,d\lambda$$

     pour chaque bande passante optique, ce qui fournit les valeurs vraies de $L_A$ et $L_B$ ;

     c) on détermine ensuite les fonctions $V = g(L)$ pour chacune des deux voies du pyromètre ;
   - puis, à l'aide du pyromètre ainsi étalonné, on effectue les mesures de la température inconnue d'un corps à examiner en mettant en oeuvre les étapes suivantes :

     d) on mesure les tensions électriques $V_i$ et $V_j$ fournies par la voie 1 et par la voie 2 du pyromètre lors de l'examen optique du corps ;

     e) on en déduit, par les fonctions $V = g(L)$, les valeurs $L_A$ et $L_B$ de la luminance énergétique réellement reçue par chaque voie ;

     f) on recherche par itérations à l'aide d'un ordinateur celle des courbes de Planck $L = f(\lambda)$, dont le rapport des intégrales

     $$\int_{\lambda_{A1}}^{\lambda_{A2}} L\,d\lambda \Big/ \int_{\lambda_{B1}}^{\lambda_{B2}} L\,d\lambda$$

     est précisément égal au rapport $L_A/L_B$, ladite courbe correspondant précisément à la température recherchée.

2. Procédé d'exploitation des signaux fournis par un spectromètre optique selon la revendication 1,

caractérisé en ce que l'information électromagnétique fournie par le pyromètre est transmise simultanément et en parallèle à trois photodétecteurs A, B et C spécialisé chacun dans une bande de longueur d'onde $\Delta\lambda$ et en ce que l'on constitue les deux voies 1 et 2 de l'appareil de trois manières différentes en utilisant successivement les couples de photodétecteurs AB, BC et AC.

3. Pyromètre optique pour la mise en oeuvre du procédé selon la revendication 2, caractérisé en ce qu'il comporte trois photodétecteurs, et, pour transmettre l'information électromagnétique depuis le capteur optique jusqu'à ces photodétecteurs, une fibre optique à coeur triple, chacun de ceux-ci alimentant l'un des trois photodétecteurs.

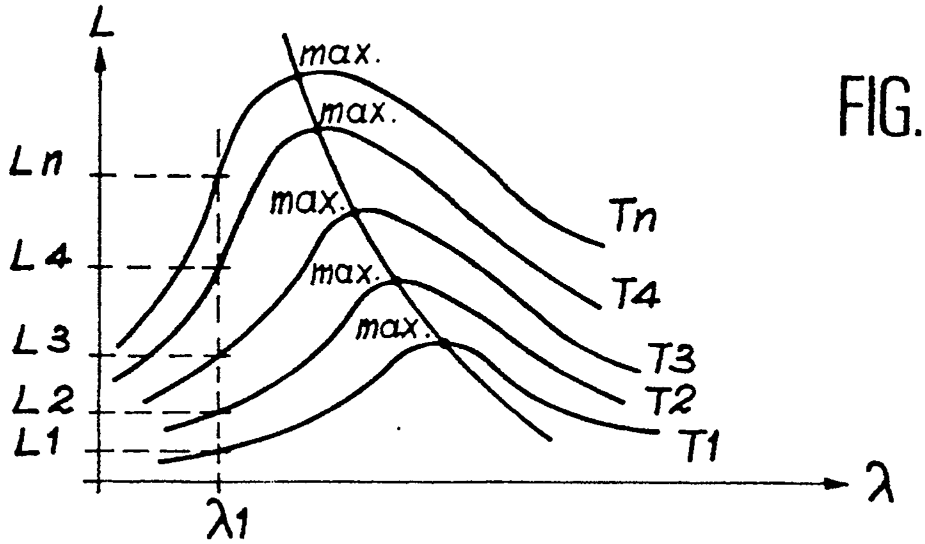


FIG. 1

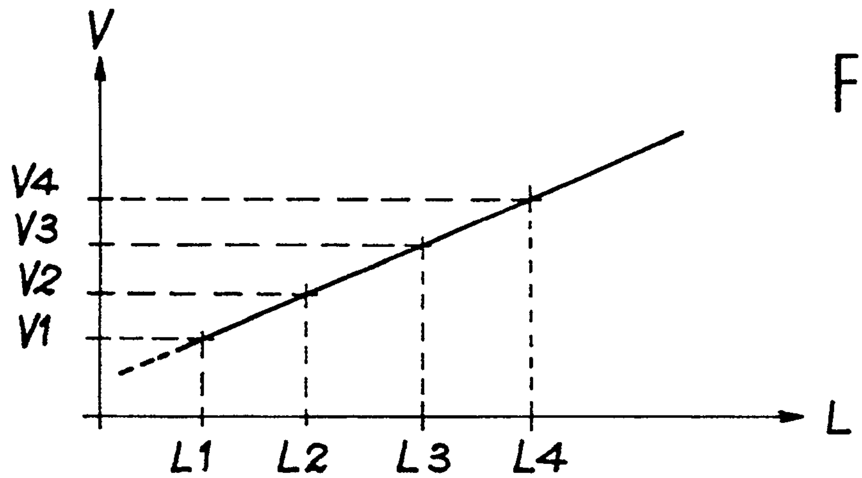


FIG. 2

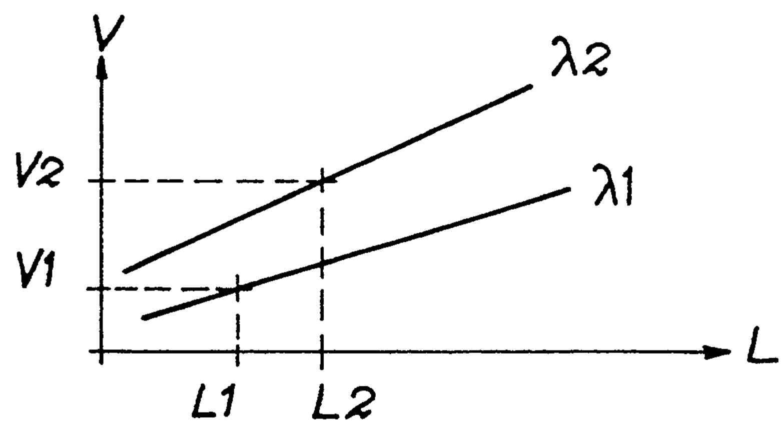


FIG. 3

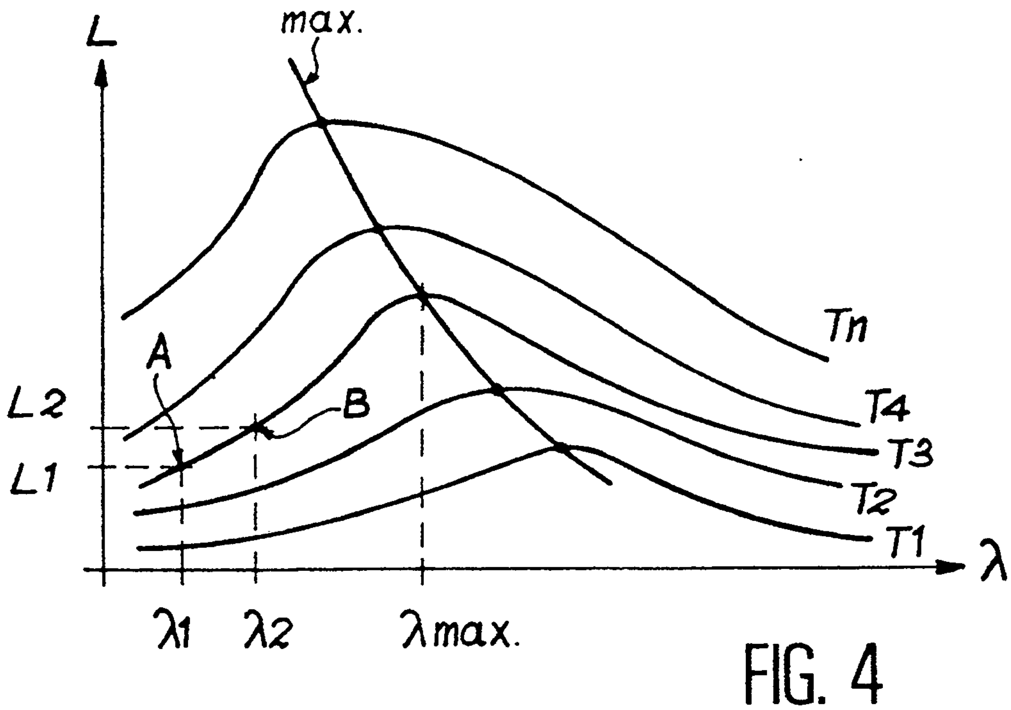
L
max.
Tn
T4
T3
T2
T1
A
B
L2
L1
λ
λ1
λ2
λmax.

FIG. 4

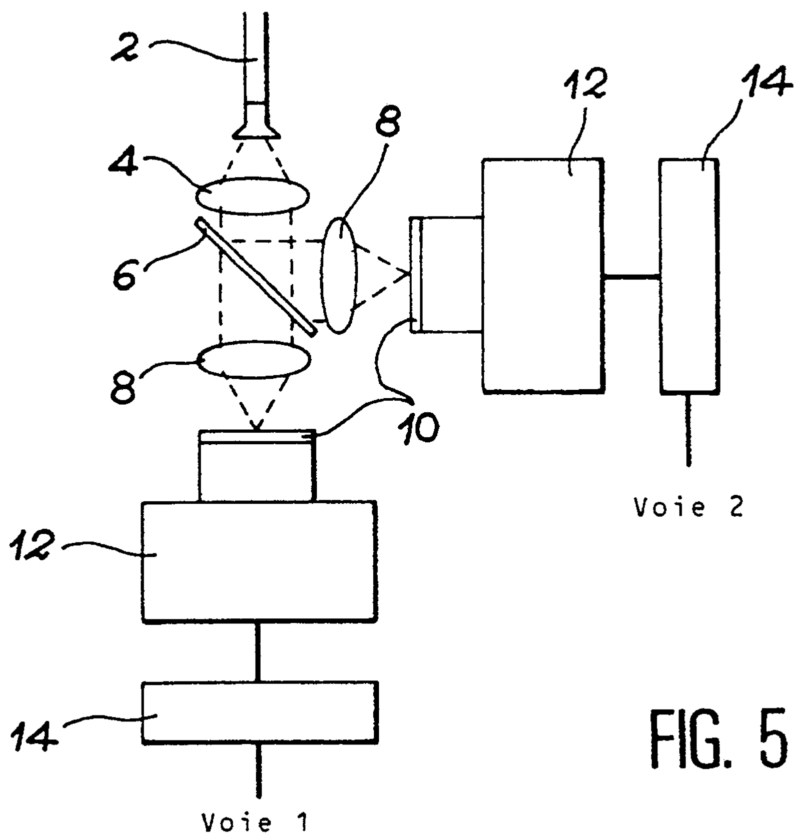
2
4
6
8
8
10
12
14
12
14
Voie 2
Voie 1

FIG. 5

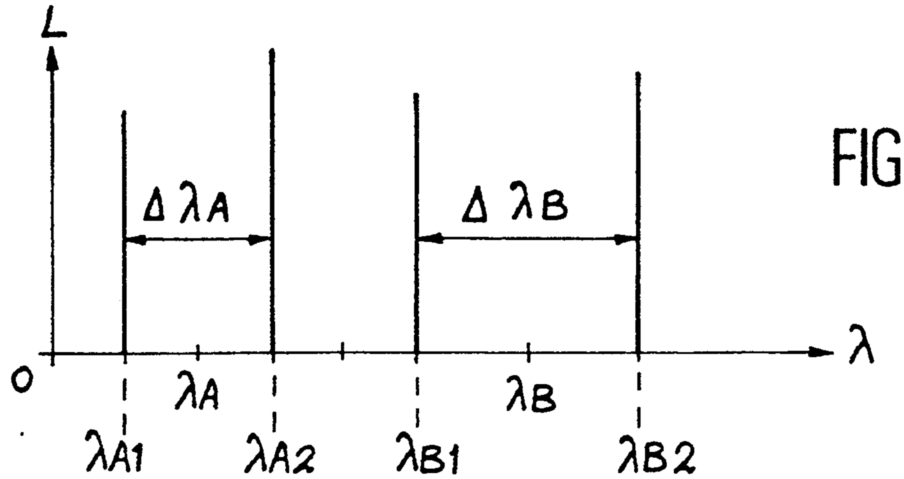


FIG. 6

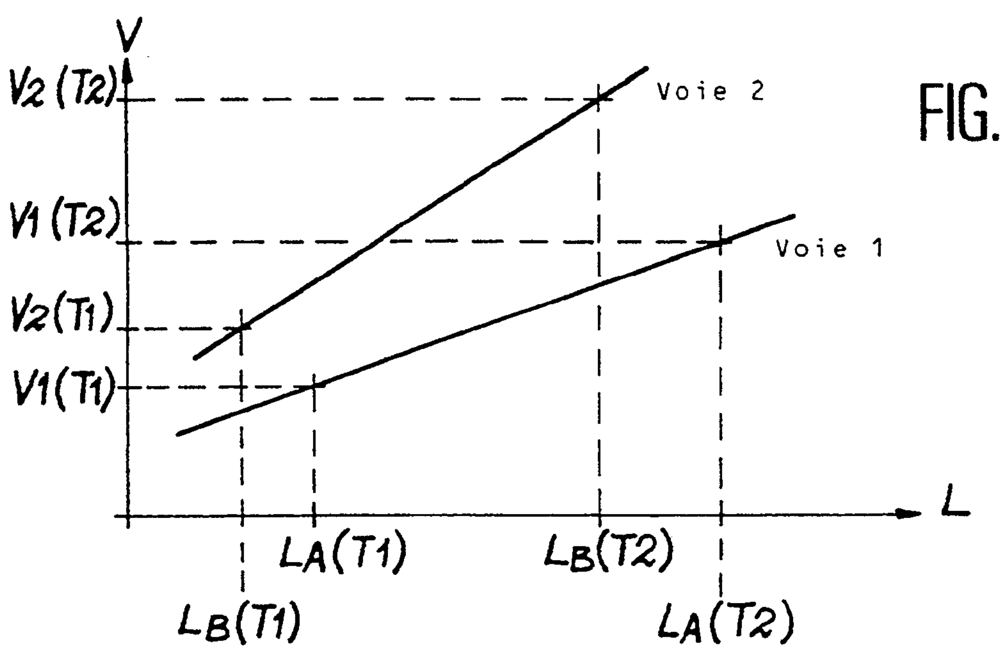


FIG. 7

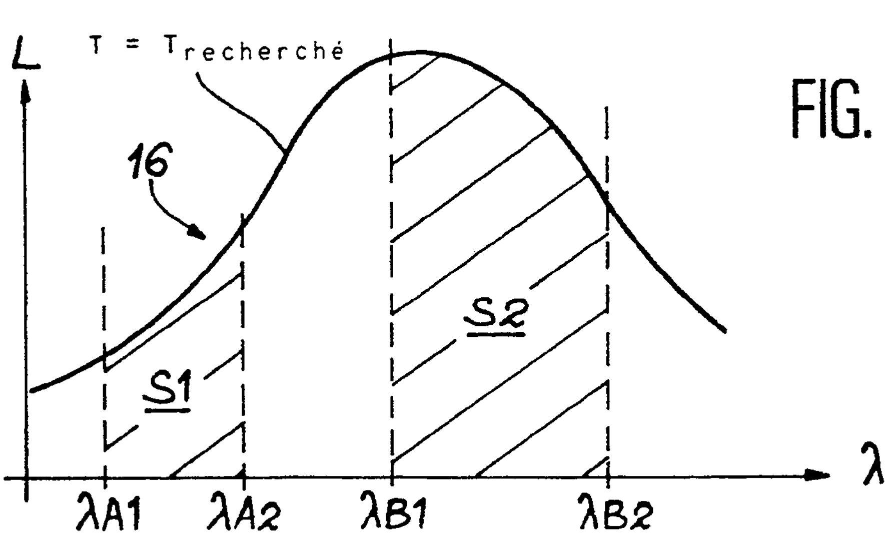


FIG. 8

FIG. 9

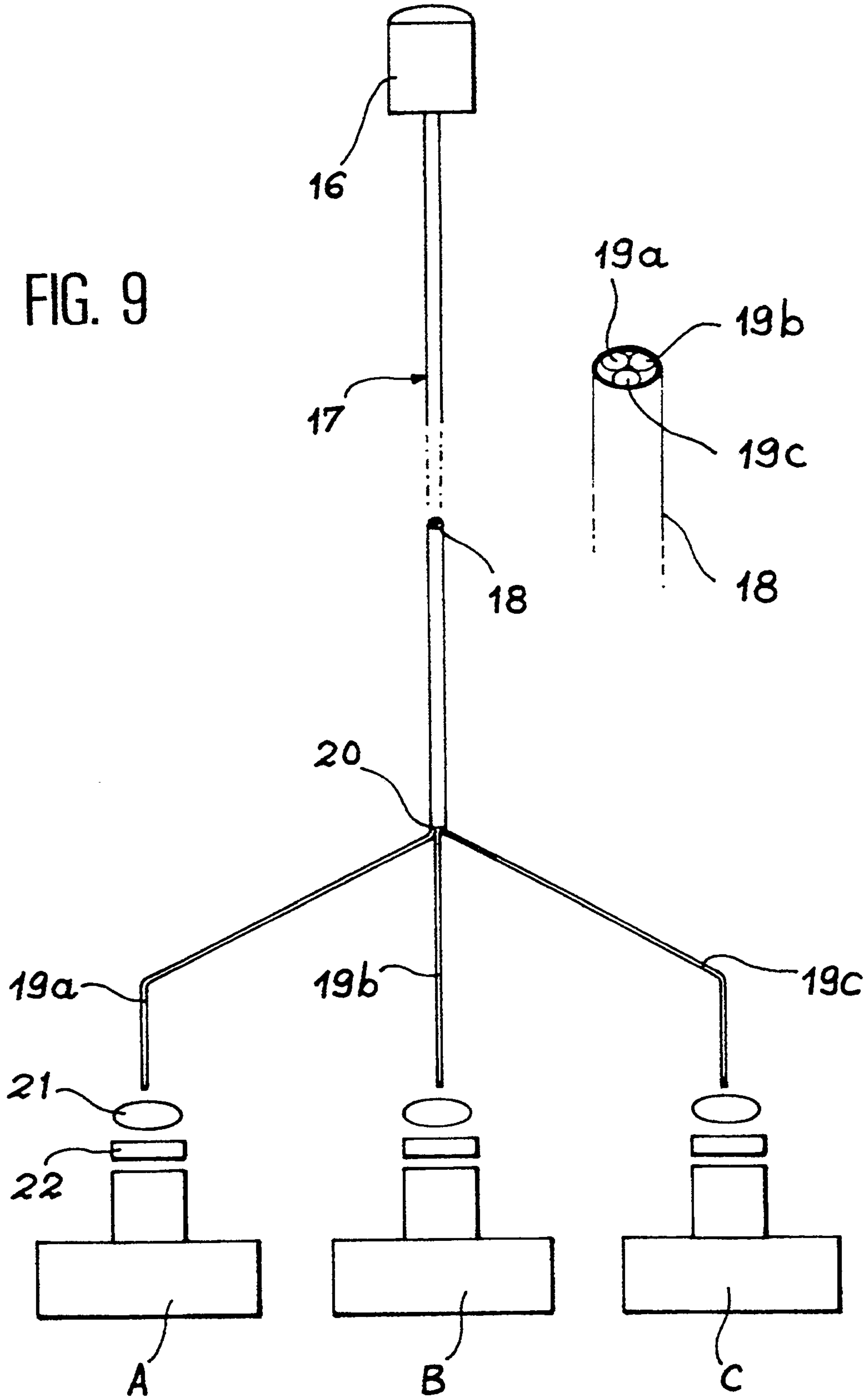

Office européen des brevets

RAPPORT DE RECHERCHE EUROPEENNE

Numero de la demande

EP 91 40 1671

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 821 476 (VEB MESSGERÄTEWERK)<br>--- | | G 01 J 5/60<br>G 01 J 5/00 |
| A | DE-A-3 149 523 (VEB MESSGERÄTEWERK)<br>--- | | |
| A | JOURNAL OF PHYSICS E/SCIENTIFIC INSTRUMENTS, vol. 20, no. 6, partie 1, juin 1987, pages 615-620, Bristol, GB; T.P. JONES et al.: "Radiation pyrometers for temperature measurement during aluminium processing"<br>----- | | |
| | | | **DOMAINES TECHNIQUES RECHERCHES (Int. Cl.5)** |
| | | | G 01 J |

Le présent rapport a été établi pour toutes les revendications

| Lieu de la recherche | Date d'achèvement de la recherche | Examinateur |
|---|---|---|
| LA HAYE | 26-08-1991 | VAN DEN BULCKE E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)